# EUROPEAN PATENT SPECIFICATION

(11) **EP 0 433 021 B1**
(45) Date of publication and mention of the grant of the patent: **28.02.1996**
(21) Application number: 90313448.4
(22) Date of filing: 11.12.1990
(51) Int. Cl.: G11B 11/10, G11B 5/105, G11B 21/21

(54) **Floating type magnetic head device**
Schwebende Magnetkopf-Anordnung
Dispositif de tête magnétique flottante

(30) Priority: 12.12.1989 JP 323323/89; 07.12.1990 JP 400895/90
(43) Date of publication of application: 19.06.1991
(73) Proprietor: SHARP KABUSHIKI KAISHA, Osaka 545 (JP)
(72) Inventor: Katayama, Hiroyuki, Nara-shi, Nara-ken (JP); Nakayama, Junichiro, Shiki-gun, Nara-ken (JP); Miyake, Tomoyuki, Nara-shi, Nara-ken (JP); Ohta, Kenji, Kitakatsuragi-gun, Nara-ken (JP)
(74) Representative: Brown, Kenneth Richard

(56) References cited:
- GB-A- 988 021
- US-A- 4 814 907

## Description

### FIELD OF THE INVENTION

The present invention relates to a floating type magnetic head device which is provided in a magneto-optical recording-reproduction apparatus, magnetic recording-reproduction apparatus, or other apparatus, in order to permit recording, reproducing, erasing and/or overwriting operations to be performed on a recording medium for use therein.

### BACKGROUND OF THE INVENTION

Magneto-optical disk devices have been noted as devices which permit overwriting and further realize high-density and large-capacity recording and/or reproducing operations. At present, international standardization with respect to those devices has been under consideration, and some models for practical applications have been sold on the market, which may be referred to as the first generation of those devices. Further, the technological development of magneto-optical disk devices has been rapidly carried out with a view to achieving a higher speed of operation and better functioning of the devices.

Among those studies of the devices, the one which is most actively engaged in is that of overwriting technique for enabling higher recording speeds. Overwriting is one of the recording methods wherein new information can be written directly on a recorded area of a recording medium without the necessity of initializing the area bearing previous information beforehand. In the aspect of magneto-optical recording, so-called magnetic field modulation method is considered as a prospective overwriting technique. In the magnetic field modulation method, an auxiliary magnetic field is applied to a portion on a recording medium irradiated by a light beam such that the direction of magnetization is inverted according to information to be recorded. In principle, the mechanism for generating the auxiliary magnetic field includes an electro-magnet.

Meanwhile, conventionally electro-magnets of winding type are suggested in constituting the auxiliary magnetic field generating mechanism (see Japanese Patent Laid-Open Publication No. 279504/1987 (Tokukaisho 62-279504)). However, electro-magnets of this type present problems that it is difficult to obtain high speed inversion of the magnetic field in accordance with information to be recorded because of high impedance of the coil and that considerably large power consumption is necessary to apply an enough magnetic field to a recording area since an efficient application of magnetic field to the recording area is difficult to achieve.

Therefore, in order to provide high-speed switching of the magnetic field in the above-mentioned auxiliary magnetic field generating mechanism, floating type magnetic heads are proposed (see Jpn. J. Appl. Phys., Vol. 26, (1987) Suppl. 26-4, pp147-154 by T. Nakao, M. Ojima, T. Miyamura, S. Okamine, H. Sukeda, N. Ohta and Y. Takeuti). As the floating type magnetic head, a magnetic head which is miniaturized as small as that for use with a hard disk is adopted. Further, the floating magnetic head is designed so as to float above a rotating magneto-optical disk, having a gap of substantial several µm to several tens of µm in between.

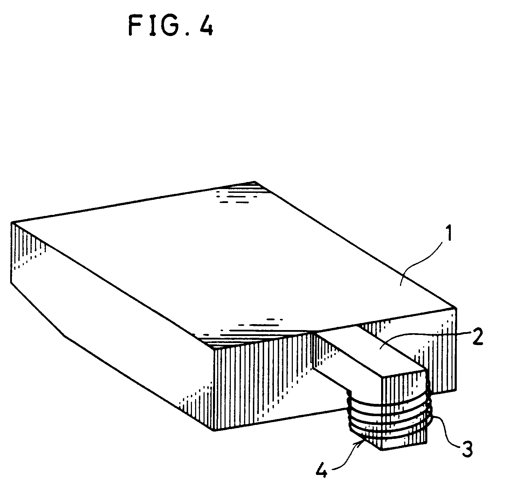

As illustrated in Fig. 4., the floating type magnetic head normally includes a slider 1 for permitting sliding movements with a floating state above a magneto-optical disk (not shown) and a magnetic head 4 having a magnetic core 2 and a coil 3. The magnetic head 4 is fixedly secured to the slider 1 from the outside at the end portion thereof from which an air stream flows out when the slider 1 slides with a floating state. The reason why the floating type magnetic head can float is that an air pressure is produced by the air stream flowing into a contact surface between the magneto-optical disk and the slider 1 due to the rotation of the magneto-optical disk. A predetermined gap between the magnetic head 4 and the magneto-optical disk is maintained through a mechanical balance between the above air pressure and a pressure applied by a suspension, not shown, whereto the floating type magnetic head is secured, so as to depress the slider 1 to the magneto-optical disk. Overwriting operation for information is performed by inverting the direction of the magnetic field according to information to be recorded with the floating state of the magnetic head 4.

However, in the structure as described above where the magnetic head 4 is fixedly secured to the slider 1 from the outside at the end portion thereof, so-called head crash might occur. Here, head crash is a trouble caused by a fact that when on the surface of the magneto-optical disk there exists dust or a projecting object greater than the gap between the magneto-optical disk and the magnetic head, the magnetic head 4 is damaged due to its contact with the dust or the projecting object.

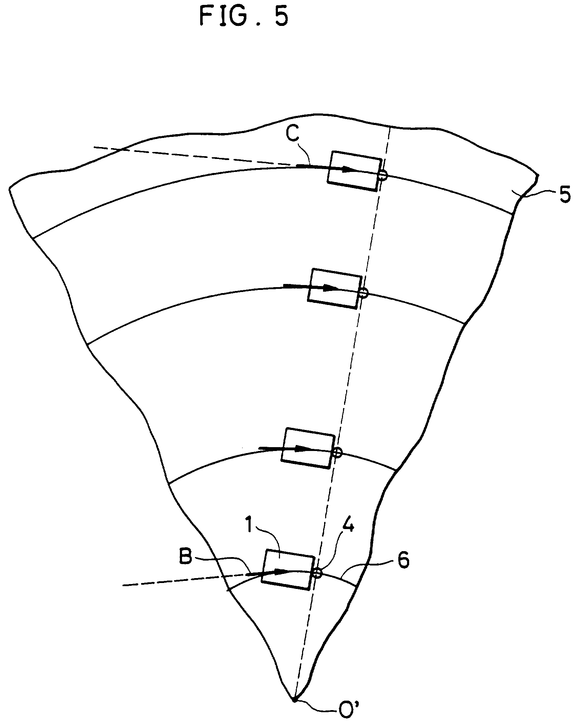

Further, in magneto-optical devices, in order to effectively apply a magnetic field to a recording area, it is important to conform the center of the magnetic pole of the magnetic head 4 to the center of a light beam focused on the disk by an optical head, not shown. Here, as illustrated in Fig. 5, in a recording, reproducing, or other operation, the center of the magnetic pole of the magnetic head 4 being positioned above a track 6 formed on the magneto-optical disk 5 is assumed to move linearly in the radial direction toward the circumferential side while relatively moving above the magneto-optical disk 5 in a rotation direction. (O' in Fig. 5 represents the center of the magneto-optical disk 5.) In this case, the direction of an air stream at the center of the slider 1 varies depending on an instantaneous position in a radial direction on the magneto-optical disk 5. This will be obviously shown by comparing an arrow B located at an inner section of the magneto-optical disk 5 with an arrow C at an outer section thereof. The floating characteristics of the slider 1 vary according to the direction of the air stream, and consequently the gap between the magnetic head 4 and the magneto-optical disk 5 changes depending on an instantaneous position in a radial direction on the magneto-optical disk 5. This causes an adverse effect that intensity of a magnetic field to be applied by the magnetic head 4 might vary undesirably. In other words, a magnetic field should be applied by the magnetic head 4 right onto the central position of an optical beam projected on the magneto-optical disk, that is, an access position where recording is to be performed; however, in the arrangement described above, intensity of a magnetic field to be applied by the magnetic head 4 is caused to change depending on an instantaneous position in the radial direction on the magneto-optical disk, thereby presenting a problem that accuracy of recording is adversely affected.

GB-A-988.021 discloses a self-loading transducer mounting in which a purely magnetic head is located in a central position of a base used as a slider in order that the recording gap is closest to the surface of the recording medium.

### SUMMARY OF THE INVENTION

It is an object of the present invention to provide a floating type magnetic head device which is capable of preventing head crash of a magnetic head installed therein.

It is another object of the present invention to provide a floating type magnetic head device capable of maintaining uniform floating characteristics of a slider regardless of an instantaneous position in a radial direction on a magneto-optical disk, whereby accuracy of recording can be improved.

The above objects are achieved by, a floating type magnetic head and a magneto-optical recording device according to the subject matter of independent claims 1 and 6 respectively.

With the above arrangement, since the magnetic head is protected by the slider without having any part thereof exposed to the outside of the slider, a possibility that head crash of the magnetic head may occur due to its contact with dust or a projecting object existing on the surface of the recording medium is remarkably reduced.

Further, the magnetic head is disposed in the cavity section situated substantially in the center of the slider; therefore, the direction of an air stream at the center of the slider is maintained substantially constant regardless of an instantaneous position in a radial direction of the recording medium, and consequently floating characteristics of the floating type magnetic head device are maintained substantially constant regardless of an instantaneous position in a radial direction of the recording medium. Thus, accuracy of recording can be improved.

For a fuller understanding of the nature and advantages of the invention, reference should be made to the ensuing detailed description taken in conjunction with the accompanying drawings.

### BRIEF DESCRIPTION OF THE DRAWINGS

Fig. 1 which shows one embodiment of the present invention, is a schematic vertical sectional view of a floating type magnetic head device.

Fig. 2 which shows another embodiment of the present invention, is a schematic vertical sectional view of a floating type magnetic head device.

Fig. 3 is a schematic plan view showing a direction of an air stream at the center of a slider on a magneto-optical disk.

Figs. 4 and 5 show the prior art.

Fig. 4 is a schematic perspective view of a floating type magnetic head.

Fig. 5 is a schematic plan view showing a direction of an air stream at the center of a slider on a magneto-optical disk.

### DESCRIPTION OF THE EMBODIMENTS

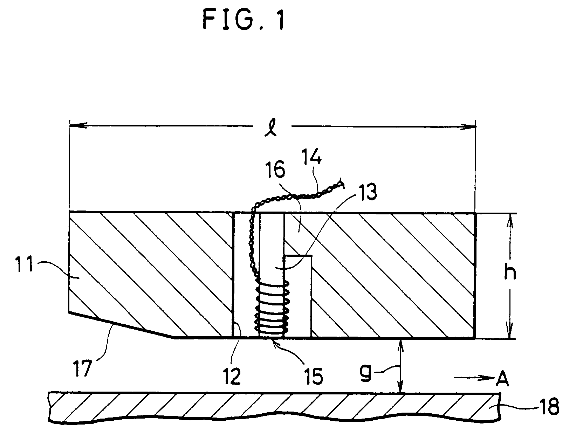

The following description will discuss one embodiment of the present invention referring to Fig. 1.

A floating type magnetic head device in accordance with the present invention may be incorporated in a magneto-optical disk device for performing magneto-optical recording, for example, on a disk-shaped vertical magnetizing medium by using the magnetic field modulation method. Further, the present invention is applicable to a magnetic head for use in conventional magnetic recording devices for recording on a magnetic disk.

The floating type magnetic head device includes a slider 11 which is substantially rectangular parallelepiped in shape. Substantially in the center of the slider 11, is formed a cavity section 12 penetrating the slider 11 in the direction perpendicular to its gliding plane. Further, one end portion of the gliding plane of the slider 11 forms an inclined face 17. The inclined face 17 has a function to lead an air stream between the gliding plane of the slider 11 and a magneto-optical disk 18 as a recording medium when the magneto-optical disk 18 rotatively moves in a direction indicated by an arrow A in Fig. 1.

On the other hand, in the cavity section 12 is disposed a magnetic head 15 comprising a magnetic core 13 and a coil 14 wound around the magnetic core 13. The upper portion of the magnetic core 13 is fixedly secured by the use of adhesive or the like to a protruded wall 16 protruding inside the cavity section 12. The bottom surface of the magnetic core 13 and that of the slider 11 (namely, the gliding surface) are positioned substantially on the same plane. The slider 11 may be made up of ceramic (for example, barium titanate) with a total length l of 6 mm, a total height h of 1.5 mm and a total length (that is, a size in the direction orthogonal to both directions of the length and the height) of 4 mm. Moreover, as a concrete example, the coil 14 is composed of a Cu wire with a diameter of 50 µm, which is wound in 15 turns around a magnetic core 13 made up of prismatic ferrite with a bottom size of 0.2 mm × 0.2 mm and a height of 1.5 mm.

The slider 11 is always depressed downward, that is, toward the magneto-optical disk 18 side by a suspension, not shown, and the gliding plane thereof comes into contact with the surface of the magneto-optical disk 18 when rotation of the magneto-optical disk 18 is stopped. Additionally, although not shown in the figures, the magneto-optical disk device is provided with an optical head, a driving section for rotating the magneto-optical disk 18 and other sections, besides the floating type magnetic head device.

In the above arrangement, when the magneto-optical disk 18 rotatively moves in the direction indicated by the arrow A in Fig. 1, an air stream produced by the rotative movement is allowed to flow between the gliding plane of the slider 11 and the surface of the magneto-optical disk 18 through the inclined face 17, thereby causing a floating force to the slider 11. With this mechanism, the slider 11 is permitted to float up to a height where the floating force just balances the depressing force by the suspension, and therefore a length g of a resulting gap between the gliding plane and the magneto-optical disk 18 is kept at a predetermined value.

In this condition, a magnetic field capable of inverting according to information to be recorded is applied onto the magneto-optical disk 18 by the magnetic head 15, and simultaneously a laser beam is projected onto the magneto-optical disk 18 by the optical head, thereby permitting the information to be over-written on previous information. Additionally, in this case, reproducing operation is performed through the optical head.

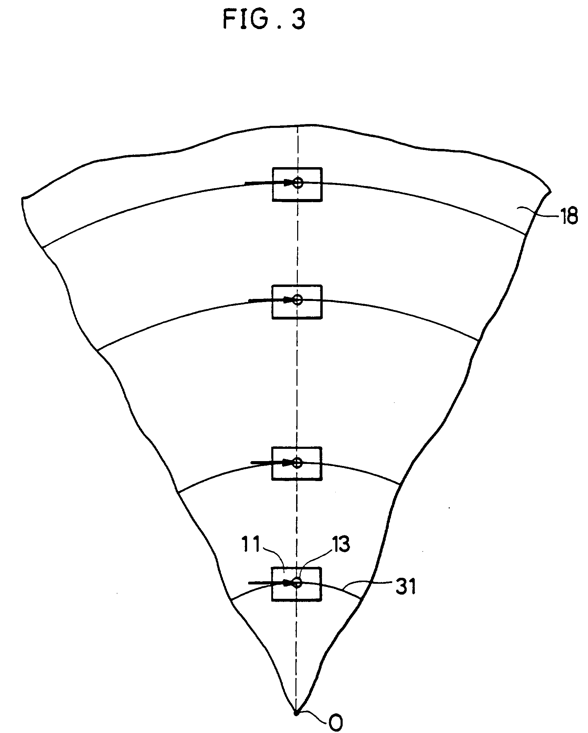

In the present embodiment, the value of the length q of the gap becomes slightly smaller than that of a conventional model due to the cavity section 12 formed in the slider 11; however, a floating type magnetic head of the present invention has an important advantage in that since the central position of the magnetic head 15 is adapted to coincide with the central position of the slider 11, the direction of an air stream at the center of the slider 11 is maintained constant regardless of an instantaneous position in a radial position on the magneto-optical disk 18. More concretely, as illustrated in Fig. 3, suppose that in a recording, reproducing, or other operation, the center of the magnetic pole of the magnetic head 13 being positioned above a track 31 formed on the magneto-optical disk 18 moves linearly in the radial direction toward the circumferential side while relatively moving above the magneto-optical disk 18 in a rotation direction. (O in Fig. 3 represents the center of the magneto-optical disk.) In this case, as is obviously shown by Fig. 3, the direction of an air stream at the center of the slider 11 is maintained constant regardless of an instantaneous position on the magneto-optical disk 18. Therefore, floating characteristics of the floating type magnetic head device are maintained constant regardless of an instantaneous position in a radial direction on the magneto-optical disk 18. Consequently, a magnetic field having an enough intensity can be constantly and stably applied by the magnetic head 15 onto a center of a spot of a laser beam projected on the magneto-optical disk 18 by the optical head, thereby improving accuracy of recording. Further, the magnetic head 15 is enclosed by walls of the cavity section 12 in every side, and therefore, even if there exists dust or a projecting object on the surface of the magneto-optical disk 18, occurrence of head crash due to contact of the magnetic head 15 with that can be reduced.

Additionally, not limited to the aforementioned materials, the slider 11 may be made up of, for example, Al, Al₂O₃, ferrite, or other materials. Moreover, the shape of the slider 11 may be altered according to a rotation speed of the magneto-optical disk 18, a depressing condition by the suspension, a required floating gap, or other factors.

Furthermore, in the above embodiment, the magnetic head 15 is simply inserted into the cavity section 12 and fixedly secured thereto; however, in lieu of this structure, a space existing between the walls of the cavity section 12 and the magnetic head 15 may be filled with non-magnetic resin or the like. With the structure, protection effect for the magnetic head 15 can be further increased, and since no portion of the air stream flowing along the bottom surface of the slider 11 is allowed to escape upward through the cavity section 12 of the slider 11, the length q of the gap between the slider 11 in floating state and the magneto-optical disk 18 can be widened.

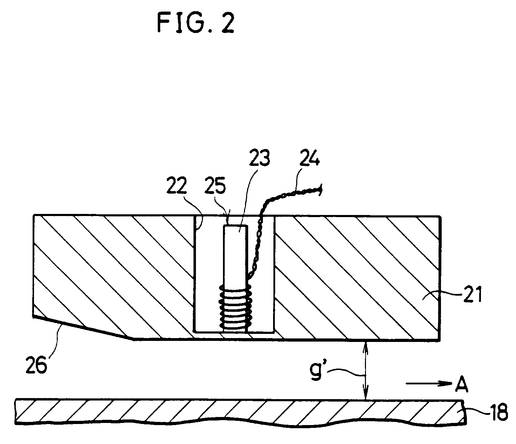

The following description will discuss a second embodiment of the present invention referring to Fig. 2.

A floating type magnetic head device of the second embodiment also includes a slider 21, and a cavity section 22 is formed substantially in the center of the slider 21. However, the cavity section 22 has an opening only at the upper end thereof, and at the bottom part of the cavity section 22 is disposed a very thin bottom wall.

In the cavity section 22 is disposed a magnetic head 25 comprising a magnetic core 23 and a coil 24 wound around the magnetic core 23. The bottom face of the magnetic core 23 is fixed to the bottom wall with adhesive or the like. Additionally, as with the aforementioned embodiment, one end portion of a gliding plane of the slider 21 forms an inclined face 26, and the slider 21 is depressed toward a magneto-optical disk 18 side by a suspension not shown.

The operation of the second embodiment is substantially the same as that of the first embodiment. However, since the cavity section 22 is formed without penetrating the gliding plane of the slider 21, the entire gliding plane of the slider 21 can be shaped as uniformly as that of a conventional one. Further, a length g′ of a gap between the slider 21 in a floating state and the magneto-optical disk 18 becomes greater than the length g of the aforementioned embodiment, thereby maintaining a floating gap substantially identical to that of a conventional one. This allows alternations in designing the floating type magnetic head device to be minimized.

In addition, it is beneficial in releasing heat produced in the magnetic core 23 to have an arrangement wherein the upper end portion of the magnetic core 23 is adapted to contact with the wall of the cavity section 22.

As described above, the floating type magnetic head device of the present invention includes a cavity section provided substantially in a center of a slider installed therein and a magnetic head incorporated inside the cavity section.

With the arrangement, since no part of the magnetic head is exposed to the outside of the slider, a possibility that the magnetic head is damaged by head crash due to its contact with dust or a projecting object existing on the surface of the recording medium is remarkably reduced.

Further, since the magnetic head is disposed in a vicinity of the center of the slider, it can be avoided that the direction of an air stream at the center of the slider varies depending on an instantaneous position in a radial direction of the recording medium, thereby providing stable floating characteristics of the floating type magnetic head device and improving accuracy of recording.

The invention being thus described, it may be obvious that the same may be varied in many ways. Such variations are not to be regarded as a departure from the scope of the invention.

## Claims

1. A floating type magnetic head for a magnetooptical recording and/or reproducing device comprising:
a slider (21) which floats above a recording medium (18) whilst moving relative thereto; and
a magnetic head (25) for recording and/or reproducing information on or from the recording medium (18),
characterised in that said slider (21) has a cavity (22) formed substantially in the centre of said slider (21) in a surface remote from a gliding plane of said slider (21) without penetrating said gliding plane, and said magnetic head (25) is mounted to a bottom wall of said cavity (22) adjacent to the gliding plane to apply a magnetic field to said medium (18) through said gliding plane.

2. A floating type magnetic head as claimed in claim 1, wherein said slider has an inclined surface (26) at the leading edge of said gliding plane.

3. A floating type magnetic head as claimed in claim 1, or claim 2 including suspension means for biasing the slider (21) towards said recording medium (18).

4. A floating type magnetic head as claimed in any one of claims 1 to 3 wherein said magnetic head (25) includes a magnetic core (23) having a lower end thereof secured to said bottom wall of said cavity (22).

5. A floating type magnetic head as claimed in claim 4 wherein an upper end of said magnetic core (23) is in thermal contact with a wall of said cavity (22).

6. A magnetooptical recording device comprising:
a laser source for directing a beam of light onto a track of a magnetooptical disk (18); and
a magnetic head (15;25) mounted on a slider (11,21) which floats above the recording medium (18) whilst moving relatively thereto for cooperating with said laser source to record data on the track,
characterised in that said magnetic head (15;25) is substantially centrally mounted in a cavity (12;22) of said slider (11;21) so that the centre of the magnetic field applied to said disk (18) substantially follows the track irrespective of the radial position of the track on said disk (18).

7. A device as claimed in claim 6 wherein a bottom surface of the magnetic head (15;25) lies substantially in the plane of the gliding plane of said slider.

8. A device as claimed in claim 6 or claim 7 wherein a space between said-cavity (12;22) and said magnetic head (15;25) is filled with non-magnetic resin.

9. A magnetooptical recording/reproducing device as claimed in claim 6 incorporating a floating type magnetic head according to any one of claims 1 to 5.

## Patentansprüche

1. Schwebender Magnetkopf für ein magnetooptisches Aufzeichnungs- und/oder Wiedergabegerät, mit:
- einem Schlitten (21), der über einem Aufzeichnungsmedium (18) schwebt, während er sich relativ zu diesem bewegt; und
- einem Magnetkopf (25) zum Aufzeichnen und/oder Abspielen von Information auf bzw. vom Aufzeichnungsmedium (18);
**dadurch gekennzeichnet,** daß ein Hohlraum (22) im wesentlichen in der Mitte des Schlittens (21) an einer Fläche entfernt von einer Gleitebene des Schlittens (21) in diesem Schlitten (21) ausgebildet ist, ohne die Gleitebene zu durchstoßen, und daß der Magnetkopf (25) an der Bodenwand des Hohlraums (22) angrenzend an die Gleitebene angebracht ist, um ein Magnetfeld durch die Gleitebene hindurch an das Medium (18) anzulegen.

2. Schwebender Magnetkopf nach Anspruch 1, bei dem der Schlitten an der Vorderkante der Gleitebene eine schräge Fläche (26) aufweist.

3. Schwebender Magnetkopf nach einem der Ansprüche 1 oder 2, mit einer Aufhängungseinrichtung zum Vorbelasten des Schlittens (21) auf das Aufzeichnungsmedium (18) hin.

4. Schwebender Magnetkopf nach einem der Ansprüche 1 bis 3, wobei dieser Magnetkopf (25) einen Magnetkern (23) aufweist, dessen unteres Ende mit der Bodenwand des Hohlraums (22) verbunden ist.

5. Schwebender Magnetkopf nach Anspruch 4, bei dem das obere Ende des Magnetkerns (23) in Wärmekontakt mit einer Wand des Hohlraums (22) steht.

6. Magnetooptisches Aufzeichnungsgerät mit:
- einer Laserquelle zum Hinlenken eines Lichtstrahls auf eine Spur einer magnetooptischen Platte (18); und
- einem Magnetkopf (15; 25), der an einem Schlitten (11, 21) angebracht ist, der über dem Aufzeichnungsmedium (18) schwebt, während er sich relativ zu diesem bewegt, um zum Aufzeichnen von Daten auf der Spur mit der Laserquelle zusammenzuarbeiten;
**dadurch gekennzeichnet, daß** der Magnetkopf (15; 25) im wesentlichen zentrisch in einem Hohlraum (12; 22) des Schlittens (11; 21) so angebracht ist, daß die Mitte des an die Platte (18) angelegten Magnetfleds unabhängig von der radialen Position der Spur auf der Platte (18) im wesentlichen der Spur folgt.

7. Gerät nach Anspruch 6, bei dem die Bodenfläche des Magnetkopfs (15; 25) im wesentlichen in der Ebene der Gleitfläche des Schlittens liegt.

8. Gerät nach einem der Ansprüche 6 oder 7, bei dem der Raum zwischen dem Hohlraum (12; 22) und dem Magnetkopf (15; 25) mit einem unmagnetischen Harz ausgefüllt ist.

9. Magnetooptisches Aufzeichnungs-/Wiedergabegerät nach Anspruch 6, mit einem schwebenden Magnetkopf nach einem der Ansprüche 1 bis 5.

## Revendications

1. Tête magnétique de type flottante destinée à un dispositif d'enregistrement et/ou de reproduction magnéto-optique, comprenant:
un élément glissant (21) qui flotte au-dessus d'un support d'enregistrement (18) tandis qu'il se déplace relativement à celui-ci; et
une tête magnétique (25) pour enregistrer et/ou reproduire des informations dans un support d'enregistrement (18) ou à partir de celui-ci,
caractérisé en ce que ledit élément glissant (21) comprend une cavité (22) formée sensiblement au centre dudit élément glissant (21) dans une surface éloignée d'un plan de glissement dudit élément glissant (21) et sans pénétrer ledit plan de glissement, et ladite tête magnétique (25) est assemblée à une paroi de fond de ladite cavité (22) adjacente au plan de glissement afin d'appliquer un champ magnétique audit support (18) à travers ledit plan de glissement.

2. Tête magnétique de type flottante selon la revendication 1, dans laquelle ledit élément glissant comprend une surface inclinée (26) au niveau du bord avant dudit plan de glissement.

3. Tête magnétique de type flottante selon la revendication 1 ou 2, incluant des moyens de suspension pour pousser l'élément glissant (21) vers ledit support d'enregistrement (18).

4. Tête magnétique de type flottante selon l'une quelconque des revendications 1 à 3, dans laquelle ladite tête magnétique (25) inclut un noyau magnétique (23) ayant une extrémité inférieure fixée à la paroi de fond de ladite cavité (22).

5. Tête magnétique de type flottante selon la revendication 4, dans laquelle une extrémité supérieure dudit noyau magnétique (23) est en contact thermique avec une paroi de ladite cavité (22).

6. Dispositif d'enregistrement magnéto-optique, comprenant:
une source laser pour diriger un faisceau de lumière sur une piste d'un disque magnéto-optique (18); et
une tête magnétique (15; 25) montée sur un élément glissant (11, 21) qui flotte au-dessus du support d'enregistrement (18) tandis qu'elle se déplace par rapport à celui-ci afin de coopérer avec ladite source laser pour enregistrer des données sur la piste,
caractérisé en ce que ladite tête magnétique (15; 25) est montée sensiblement au centre dans une cavité (12; 22) dudit élément glissant (11; 21) de façon à ce que le centre du champ magnétique appliqué audit disque (18) suive sensiblement la piste indépendamment de la position radiale de la piste sur ledit disque (18).

7. Dispositif selon la revendication 6, dans lequel une surface de fond de la tête magnétique (15; 25) est sensiblement coplanaire au plan de glissement dudit élément glissant.

8. Dispositif selon la revendication 6 ou 7, dans lequel un espace entre la ladite cavité (12; 22) et ladite tête magnétique (15; 25) est rempli d'une résine non-magnétique.

9. Dispositif d'enregistrement/reproduction magnéto-optique selon la revendication 6, incorporant un tête magnétique de type flottante selon l'une quelconque des revendications 1 à 5.
